# EUROPEAN PATENT APPLICATION

(11) **EP 4 834 587 A1**
(43) Date of publication of application: **04.11.2026**
(21) Application number: 24913076.6
(22) Date of filing: 27.12.2024
(51) Int. Cl.: B41C 1/00, B32B 27/40

(54) **FILM FOR PRODUCING FLEXOGRAPHIC PRINTING PLATE AND METHOD FOR PRODUCING FLEXOGRAPHIC PRINTING PLATE**

(30) Priority: 27.12.2023 JP 2023220215
(71) Applicant: ASAHI KASEI KABUSHIKI KAISHA, Tokyo 100-0006 (JP)
(72) Inventor: ISHII, Takumi, Tokyo 100-0006 (JP)
(74) Representative: Strehl & Partner mbB
(86) International application number: PCT/JP2024/046326
(87) International publication number: WO 2025/143190

(57) **Abstract**

A film for flexographic printing plate production, including:
a base material; and
an ablation layer stacked on the base material, wherein
the ablation layer comprises polyurethane constituted by polyol and polyisocyanate, and
a ratio of the number of moles of isocyanate groups of the polyisocyanate to the number of moles of hydroxy groups of the polyol (NCO/OH) is 4.0 or more.

## Description

### Technical Field

The present invention relates to a film for flexographic printing plate production and a method for producing a flexographic printing plate.

### Background Art

In recent years, flexographic printing by flexographic printing plates has been widely used as a method for printing soft package materials such as paper and films.

A method for producing a flexographic printing plate includes, for example, the following method.

First, for an original flexographic printing plate having a photosensitive resin composition layer on a support, the photosensitive resin composition layer is subjected to ultraviolet exposure (back exposure) from the support side to establish a uniform photocured layer.

Next, relief exposure is performed from the back side, i.e., the uncured surface side of the photosensitive resin composition layer which is the side opposite to the ultraviolet exposed surface. Examples of a method for the relief exposure include a method of performing ultraviolet exposure via a transparent image carrier (mask), such as a negative film, which permits selective transmission of an ultraviolet ray, and a method of performing ultraviolet exposure via a thin layer with an ultraviolet transmitting portion formed by infrared laser ablation based on an image as digital information.

The photosensitive resin composition of the unexposed portion of the original flexographic printing plate is removed for development by washing, for example, so that a relief image is formed to obtain a flexographic printing plate.

In the development of photosensitive resin compositions, a water development scheme, which does not use organic solvents, and a heat development scheme, which does not use a developing solution, have been studied with growing environmental consciousness in recent years. However, in both of these schemes, the photosensitive resin composition in the unexposed portion is supposed to be removed and then discarded in the developing step, posing the problem that there is still room for improvement in terms of reducing the burden on the environment.

As an improvement method from the viewpoint of reducing the burden on the environment, a method for producing a flexographic printing plate using a liquid photosensitive resin composition is proposed, in which the photosensitive resin composition in the unexposed portion is recovered and recycled for production of a flexographic printing plate (see, for example, Patent Literature 1). The method for producing a flexographic printing plate described in Patent Literature 1 is prevalent as a method for producing a flexographic printing plate with high environmental adaptability since it can achieve both a reduction in the amount of the photosensitive resin composition in the unexposed portion to be discarded and a reduction in production costs for the flexographic printing plate. On the other hand, in such a method for producing a flexographic printing plate, it is important to recover the photosensitive resin composition in the unexposed portion in a state comparable to the unused state.

In recent years, the CTP (Computer To Plate) technique has also become known with regard to the method for producing a flexographic printing plate.

In the CTP technique, an ablation layer that can be ablated by an infrared ray is established on top of the photosensitive resin composition layer, and the ablation layer is removed in a desired shape by irradiating it with an infrared laser to form an active ray transmitting portion that corresponds to a negative. Next, the photosensitive resin composition layer is irradiated with an ultraviolet ray using the ablation layer as a mask to allow the photosensitive resin composition to react in the same shape as the transmitting portion formed in the ablation layer and to undergo relief exposure, and finally, the ablation layer and the unexposed portion of the photosensitive resin composition that are no longer needed are developed and removed to produce a flexographic printing plate.

### Citation List

### Patent Literature

Patent Literature 1: Japanese Patent No. 5996197

### Summary of Invention

### Technical Problem

As described above, various methods have been reported as methods for producing a flexographic printing plate, but there still remains room for improvement.

An object of the present invention is to provide a film for flexographic printing plate production comprising an ablation layer achieving both strength and laser sensitivity.

### Solution to Problem

The present inventors have found that, by adjusting the compositional features of polyurethane constituting the ablation layer, both strength and laser sensitivity of the ablation layer can be achieved.

The present invention includes the following embodiments.
[1] A film for flexographic printing plate production, comprising:
   a base material; and
   an ablation layer stacked on the base material, wherein
   the ablation layer comprises polyurethane constituted by polyol and polyisocyanate, and
   a ratio of the number of moles of isocyanate groups of the polyisocyanate to the number of moles of hydroxy groups of the polyol (NCO/OH) is 4.0 or more.
[1-1] The film for flexographic printing plate production according to [1], wherein the ratio (NCO/OH) is 4.0 to 60.0.
[1-2] The film for flexographic printing plate production according to [1] or [1-1], wherein the ratio (NCO/OH) is 5.0 to 60.0.
[2] The film for flexographic printing plate production according to any one of [1] to [1-2], wherein the ratio (NCO/OH) is 8.0 or more.
[2-1] The film for flexographic printing plate production according to any one of [1] to [2], wherein the ratio (NCO/OH) is 8.0 to 50.0.
[2-2] The film for flexographic printing plate production according to any one of [1] to [2-1], wherein the ratio (NCO/OH) is 16.0 to 40.0.
[3] The film for flexographic printing plate production according to any one of [1] to [2-2], wherein an amount of the polyurethane is 20 to 70% by mass based on a mass of the ablation layer.
[3-1] The film for flexographic printing plate production according to any one of [1] to [3], wherein an amount of the polyurethane is 30 to 60% by mass based on a mass of the ablation layer.
[3-2] The film for flexographic printing plate production according to any one of [1] to [3-2], wherein an amount of the polyurethane is 35 to 55% by mass based on a mass of the ablation layer.
[4] The film for flexographic printing plate production according to any one of [1] to [3-2], wherein the number of isocyanate groups contained in the polyisocyanate is 3 or more per 1 molecule.
[4-1] The film for flexographic printing plate production according to any one of [1] to [4], wherein the number of isocyanate groups contained in the polyisocyanate is 3 to 5 per 1 molecule.
[5] The film for flexographic printing plate production according to any one of [1] to [4-1], wherein the polyisocyanate is adduct-type polyisocyanate.
[6] The film for flexographic printing plate production according to any one of [1] to [5], wherein the ablation layer further comprises carbon black.
[7] The film for flexographic printing plate production according to any one of [1] to [6], wherein
   the polyol comprises polyester polyol,
   the polyester polyol comprises a constituent unit derived from diol, a constituent unit derived from aromatic dicarboxylic acid, and a constituent unit derived from aliphatic dicarboxylic acid, and
   a mole ratio of the aromatic dicarboxylic acid to the aliphatic dicarboxylic acid is 1.0 to 50.0.
[7-1] The film for flexographic printing plate production according to any one of [1] to [7], wherein a mole ratio of the aromatic dicarboxylic acid to the aliphatic dicarboxylic acid is 1.0 to 10.0.
[7-2] The film for flexographic printing plate production according to any one of [1] to [7-1], wherein a mole ratio of the aromatic dicarboxylic acid to the aliphatic dicarboxylic acid is 2.0 to 8.0.
[7-3] The film for flexographic printing plate production according to any one of [1] to [7-2], wherein a mole ratio of the aromatic dicarboxylic acid to the aliphatic dicarboxylic acid is 3.0 to 6.0.
[8] A method for producing a flexographic printing plate, comprising:
   a drawing step of irradiating the ablation layer of the film for flexographic printing plate production according to any one of [1] to [7-3] with an infrared ray to draw and process a pattern; and
   an exposure step of irradiating a photosensitive resin composition layer of an original flexographic printing plate with an ultraviolet ray to form a pattern using, as a mask, the ablation layer on which the pattern has been drawn and processed in the drawing step.

### Advantageous Effect of Invention

The present invention can provide a film for flexographic printing plate production comprising an ablation layer achieving both strength and laser sensitivity.

### Brief Description of Drawings

[Figure 1] Figure 1 shows a schematic cross-sectional view of the film for flexographic printing plate production of the present invention.
[Figure 2] Figure 2 shows a schematic diagram of a method for producing a flexographic printing plate using the film for flexographic printing plate production of the present invention.

### Description of Embodiments

Hereinafter, embodiments of the present invention will be specifically described, but the present invention is not limited thereto, and various modifications can be made without departing from the gist thereof.

### [Film for Flexographic Printing Plate Production]

One embodiment of the present invention relates to a film for flexographic printing plate production, comprising: a base material; and an ablation layer stacked on the base material, wherein
the ablation layer comprises polyurethane constituted by polyol and polyisocyanate, and
a ratio of the number of moles of isocyanate groups of the polyisocyanate to the number of moles of hydroxy groups of the polyol (NCO/OH) is 4.0 or more.

The ablation layer of the film for flexographic printing plate production according to the present embodiment has excellent strength, laser sensitivity, and blocking resistance.

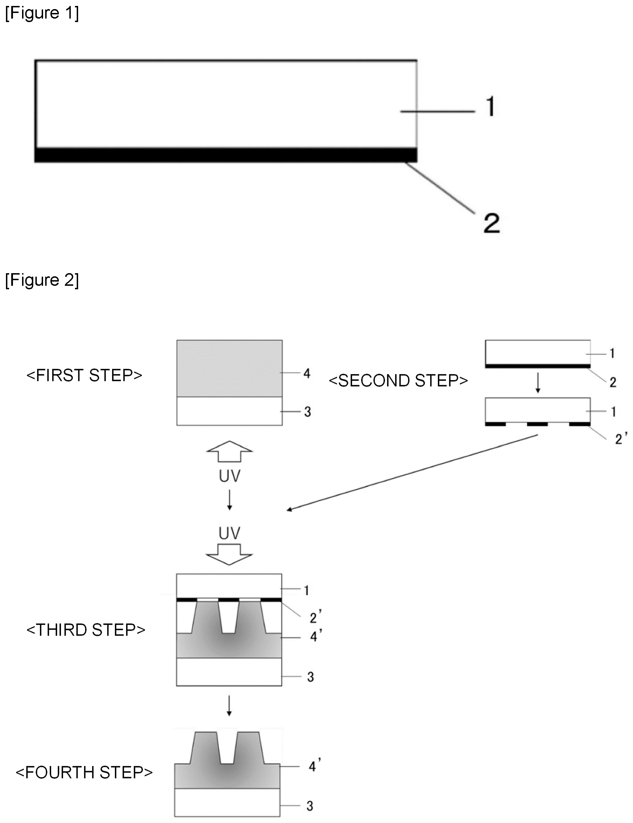

Figure 1 shows a schematic cross-sectional view of the film for flexographic printing plate production according to the present embodiment.

In the film for flexographic printing plate production according to the present embodiment, a base material 1 and an ablation layer 2, which functions as a mask when forming the target concavo-convex pattern of a flexographic printing plate, are stacked.

Hereinafter, the film for flexographic printing plate production according to the present embodiment will be described in detail.

### (Base Material)

The film for flexographic printing plate production according to the present embodiment has the base material 1 and the ablation layer 2 stacked on the base material 1. The ablation layer 2 is image-drawn and thus serves as a negative film for forming a relief in the production step of a flexographic printing plate as described later.

The quality, especially image reproducibility, of the relief is greatly affected by the negative film through which ultraviolet light transmits during the relief exposure. In general, the larger the thickness of the negative film, the greater the refraction and scattering of ultraviolet light in the negative film, and the lower the image reproducibility tends to be. Since the thickness of the base material 1 shown in Figure 1 accounts for the majority of the overall thickness of the negative film, a smaller thickness of the base material 1 is preferable from the viewpoint of flexographic printing plate quality.

On the other hand, it is also important for the negative film to have a certain degree of rigidity and dimensional stability. If the negative film is easily deformed, it tends to induce deformation and damage to the image formed on the negative film in the step before the relief exposure, resulting in reduced image reproducibility. However, if the rigidity of the negative film is too high, it tends to cause incompatibility with the apparatus in the production step of the target flexographic printing plate, or excessive stress concentration on the ablation layer during handling, causing irreversible damage such as scratches and wrinkles.

From the above-described viewpoint, the thickness of the base material 1 is preferably 10 µm or more and 400 µm or less. The above numerical value range gives a film for flexographic printing plate production with excellent image reproducibility and moderate rigidity. Furthermore, the thickness is more preferably 20 µm or more, and further preferably 40 µm or more. When the base material 1 has a thickness of 10 µm or more, sufficient strength and rigidity for practical use can be obtained, and deformation and damage to the image can be suppressed during the production step of a flexographic printing plate. In addition, from the viewpoint of ensuring moderate flexibility and providing good handleability in the production step of a flexographic printing plate, the thickness of the base material 1 is preferably 400 µm or less, more preferably 300 µm or less, and further preferably 200 µm or less.

The base material 1 preferably contains a resin having a polyester or polyolefin skeleton from the viewpoints of dimensional stability, transparency, and adhesion with the ablation layer 2. Here, the resin contained in the base material 1 may be a mixture of resins having polyester and polyolefin skeletons, or it may be a copolymer.

Examples of the polyester include, but are not limited to, polyethylene terephthalate, polybutylene terephthalate, and polyethylene naphthalate. Although not particularly limited, it is preferable to use polyethylene terephthalate as the polyester.

Examples of the resin having a polyolefin skeleton include, but are not limited to, polyethylene, polypropylene, and a resin in which they are copolymerized.

In the film for flexographic printing plate production according to the present embodiment, the base material may be used in an untreated state. However, it may be subjected to a predetermined surface treatment as necessary, or one that has been given a function such as antistatic treatment may be used. Examples of the surface treatment include a corona treatment and a matte processing.

### (Ablation Layer)

In the film for flexographic printing plate production according to the present embodiment, as shown in Figure 1, the ablation layer 2 is stacked on top of the base material 1. The ablation layer is preferably directly stacked on the base material.

The ablation layer 2 contains a predetermined resin, is ablatable by an infrared laser, and also has the function as a shielding layer for rays other than infrared ray.

The ablation layer preferably comprises a resin, an infrared ray absorbing substance, and a shielding substance.

### <Resin>

The resin of the ablation layer comprises polyurethane constituted by polyol and polyisocyanate. The polyurethane is obtained by reacting polyol with polyisocyanate.

By the ablation layer comprising polyurethane, the strength of the ablation layer tends to be improved, and the dispersibility of the infrared ray absorbing substance and the shielding substance (in particular, carbon black) tends to be improved, resulting in improved laser sensitivity of the ablation layer.

The ratio of the number of moles of isocyanate groups of the polyisocyanate to the number of moles of hydroxy groups of the polyol (NCO/OH) is preferably 4.0 to 60.0, preferably 5.0 to 60.0, further preferably 6.0 to 55.0, even more preferably 8.0 to 50.0, particularly preferably 10.0 to 45.0, and more particularly preferably 16.0 to 40.0. The number of moles of hydroxy groups and the number of moles of isocyanate groups are based on the polyol and the polyisocyanate before constituting the urethane (that is, before reaction).

When the ratio of NCO/OH is within the above range, the strength of the ablation layer tends to be improved, and the dispersibility of the infrared ray absorbing substance and the shielding substance (in particular, carbon black) tends to be improved, resulting in improved laser sensitivity of the ablation layer.

Furthermore, when the ratio of NCO/OH is within the above range, both the strength and the laser sensitivity of the ablation layer can be achieved. The achievement of both the strength and the laser sensitivity of the ablation layer is presumed to be attributable to intermolecular interactions caused by an excessive amount of isocyanate groups or amino groups derived therefrom; however, the present invention is not limited in any way by the foregoing presumption.

The ratio of NCO/OH can be adjusted as appropriate by changing the types and the quantitative ratio of the polyol and the polyisocyanate constituting the polyurethane. The ratio of NCO/OH can be measured using pyrolysis GC-MS. There are some cases where isocyanate groups excessively present in the ablation layer are hydrolyzed over time and converted into amino groups. That is, when component analysis of the ablation layer or the like is carried out, isocyanate groups contained in the polyisocyanate may be detected as amino groups. Even when detected as amino groups at the time of analysis, it can be presumed, in combination with other structural information, that they were originally isocyanate groups.

The amount of the polyurethane is, based on the mass of the ablation layer, preferably 10 to 80% by mass, more preferably 20 to 70% by mass, further preferably 25 to 65% by mass, even more preferably 30 to 60% by mass, and particularly preferably 35 to 55% by mass.

When the amount of the polyurethane is within the above range, the strength of the ablation layer tends to be improved, and the dispersibility of the infrared ray absorbing substance and the shielding substance (in particular, carbon black) tends to be improved, resulting in improved laser sensitivity of the ablation layer.

The polyol constituting the polyurethane preferably comprises polyester polyol.

By the polyol comprising polyester polyol, the strength of the ablation layer tends to be improved, and the dispersibility of the infrared ray absorbing substance and the shielding substance (in particular, carbon black) tends to be improved, resulting in improved laser sensitivity of the ablation layer.

The polyester polyol preferably comprises a constituent unit derived from diol and a constituent unit derived from dicarboxylic acid. That is, the polyester polyol is preferably obtained by reacting diol with dicarboxylic acid.

### {Diol}

The type of the diol constituting the polyester polyol is not particularly limited, but is preferably diol having 1 to 10 carbon atoms, more preferably diol having 2 to 8 carbon atoms, and further preferably diol having 2 to 6 carbon atoms.

Examples of the diol include ethylene glycol, 1,2-propanediol, 1,3-propanediol, 2-methyl-1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 3-methyl-1,5-pentanediol, 2-methyl-2,4-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol, 1,10-decanediol, diethylene glycol, triethylene glycol, cyclohexanedimethanol, and cyclohexanediol.

The diol may be used singly or may be used in combinations of two or more thereof.

It is preferable to use a combination of ethylene glycol and neopentyl glycol as the diol.

### [Dicarboxylic Acid]

Examples of the dicarboxylic acid constituting the polyester polyol include aromatic dicarboxylic acid and aliphatic dicarboxylic acid.

Examples of the aromatic dicarboxylic acid include phthalic acid, terephthalic acid, isophthalic acid, and naphthalenedicarboxylic acid.

Examples of the aliphatic dicarboxylic acid include oxalic acid, malonic acid, succinic acid, glutaric acid, adipic acid, pimelic acid, suberic acid, azelaic acid, sebacic acid, dodecanedioic acid, 2-methylsuccinic acid, 2-methyladipic acid, 3-methyladipic acid, 3-methylpentanedioic acid, 2-methyloctanedioic acid, 3,8-dimethyldecanedioic acid, 3,7-dimethyldecanedioic acid, hydrogenated dimer acid, dimer acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 1,4-dicarboxylmethylenecyclohexane, nadic acid, and methylnadic acid.

The dicarboxylic acid may be used singly or may be used in combinations of two or more thereof.

It is preferable to use a combination of aromatic dicarboxylic acid and aliphatic dicarboxylic acid as the dicarboxylic acid, and it is more preferable to use a combination of terephthalic acid, isophthalic acid, and azelaic acid.

The mole ratio of the aromatic dicarboxylic acid to the aliphatic dicarboxylic acid (aromatic dicarboxylic acid/aliphatic dicarboxylic acid) is preferably 0.5 to 16.0, more preferably 1.0 to 10.0, further preferably 2.0 to 8.0, even more preferably 2.5 to 7.0, and particularly preferably 3.0 to 6.0.

When the mole ratio of the aromatic dicarboxylic acid to the aliphatic dicarboxylic acid is within the above range, the strength of the ablation layer tends to be improved, and the dispersibility of the infrared ray absorbing substance and the shielding substance (in particular, carbon black) tends to be improved, resulting in improved laser sensitivity of the ablation layer.

### {Polyisocyanate}

The number of isocyanate groups contained in the polyisocyanate constituting the polyurethane is preferably 2 to 6, and more preferably 3 to 5, per 1 molecule.

When the number of isocyanate groups is within the above range, the strength of the ablation layer tends to be improved.

Examples of the polyisocyanate include aliphatic diisocyanate, aromatic diisocyanate, and aliphatic triisocyanate.

Examples of the aliphatic diisocyanate include ethylene diisocyanate, propylene diisocyanate, butylene diisocyanate, hexamethylene diisocyanate, trimethylhexamethylene diisocyanate, isophorone diisocyanate, 4,4'-dicyclohexylmethane diisocyanate, norbornane diisocyanate, 1,4-isocyanatocyclohexane, 1,3-bis(isocyanatomethyl)-cyclohexane, and 1,3-bis(2-isocyanatopropyl-2-yl)-cyclohexane.

Examples of the aromatic diisocyanate include tolylene diisocyanate, 4,4'-diphenylmethane diisocyanate, xylene diisocyanate, and 1,5-naphthalene diisocyanate.

Examples of the aliphatic triisocyanate include undecane 1,6,11-triisocyanate, 1,8-diisocyanate-4-isocyanate methyl octane, and 1,3,6-triisocyanate methyl hexane.

Further examples of the polyisocyanate include polymethylene polyphenyl polyisocyanate and polyisocyanate derived from the above diisocyanate compounds. Examples of the polyisocyanate derived from the above diisocyanate compounds include isocyanurate-type polyisocyanate, biuret-type polyisocyanate, urethane-type polyisocyanate, allophanate-type polyisocyanate, and carbodiimide-type polyisocyanate.

The polyisocyanate is preferably an adduct product (adduct-type polyisocyanate). The adduct-type polyisocyanate is a reaction product of polyisocyanate with another compound (usually an active hydrogen compound such as polyhydric alcohol). Specifically, the adduct product is preferably an addition product of polyisocyanate with polyhydric alcohol.

The polyisocyanate constituting the adduct product is preferably diisocyanate. Specific examples of the diisocyanate are as described above.

The polyhydric alcohol constituting the adduct product is preferably trihydric alcohol. Examples of the trihydric alcohol include trimethylolethane, trimethylolpropane, hexanetriol, and glycerin.

### <Infrared Ray Absorbing Substance>

The ablation layer 2 preferably comprises an infrared ray absorbing substance to carry out ablation processing. Examples of the infrared ray absorbing substance include a simple substance or compound that has strong absorption, usually in the range of 750 to 2000 nm.

Examples of the infrared ray absorbing substance include, but are not limited to, an inorganic pigment such as carbon black, graphite, copper chromite, and chromium oxide; and a dye such as polyphthalocyanine compound, cyanine dye, and metal thiolate dye. The smaller the particle size, the higher the sensitivity to the infrared laser. In particular, carbon black can be used with a particle size in the wide range of 13 to 85 nm, and is preferable as the infrared ray absorbing substance. Carbon black can also function as the shielding substance, as will be described below. These infrared ray absorbing substances are added to the extent that they provide sensitivity capable of being ablated by the laser beam used.

### <Shielding Substance>

The ablation layer 2 preferably comprises a shielding substance for non-infrared rays such as ultraviolet ray in order to serve as a mask. As the shielding substance for non-infrared rays, a substance that reflects or absorbs ultraviolet light can be used.

Examples of the shielding substance include, but are not limited to, an ultraviolet ray absorber, carbon black, and graphite.

### <Film Thickness of Ablation Layer>

The ablation layer 2 in the film for flexographic printing plate production according to the present embodiment should have a larger film thickness from the viewpoint of ensuring shielding against an ultraviolet ray during the exposure step described below, and should have a thinner film thickness from the viewpoint of increasing ablatability.

From the above viewpoints, the film thickness of the ablation layer 2 is preferably 0.1 µm or more and 20 µm or less, more preferably 0.5 µm or more and 15 µm or less, and further preferably 1.0 µm or more and 10 µm or less.

For the non-infrared ray shielding effect of the ablation layer 2, the ablation layer 2 preferably has an optical density of 2.0 or more, and more preferably has an optical density of 2.5 or more.

The optical density can be measured using the D200-II transmission densitometer (manufactured by GretagMacbeth LLC). In addition, the optical density is the so-called visual density (ISO visual), and the light to be measured is in the wavelength range of about 400 to 750 nm.

### [Method for Producing Film for Flexographic Printing Plate Production]

Examples of the method for producing a film for flexographic printing plate production according to the present embodiment include, but are not limited to, the following method: for example, in the case of using carbon black as both the infrared ray absorbing substance and the shielding substance for non-infrared rays, at first, a solution of the resin described above is prepared using a predetermined solvent, carbon black and a dispersing agent are added thereto, and carbon black is dispersed in the resin solution to thereby obtain a solution or dispersion for ablation layer 2 film formation. Thereafter, a predetermined base material 1 is coated with the solution or dispersion for ablation layer film formation to thereby producing a film for flexographic printing plate production.

As the method for dispersing carbon black in the resin solution, a method of using forced stirring with a stirring blade in combination with stirring utilizing ultrasonic waves or various types of mills is effective. Alternatively, the resin, carbon black, and the dispersing agent are preliminary kneaded using an extruder or kneader and then dissolved in the solvent, which is also an effective method for obtaining good dispersibility of carbon black. Another example is a method in which carbon black is forcibly dispersed in the resin in the state of a latex dispersion.

The solvent used to prepare the solution or dispersion for ablation layer 2 film formation can be selected as appropriate, taking into consideration the solubility of the resin and infrared ray absorber to be used. Only one type of solvent may be used, or a mixture of two or more solvents may be used.

Also, the film quality of the ablation layer 2 can be improved by mixing a solvent with a relatively low boiling point and a solvent with a high boiling point to control the volatilization rate of the solvent, for example.

Examples of the solvent for ablation layer 2 film formation include, but are not limited to, toluene, xylene, cyclohexane, methyl acetate, ethyl acetate, propyl acetate, butyl acetate, amyl acetate, methyl ethyl ketone, acetone, cyclohexanone, methylcyclohexane, ethylene glycol, propylene glycol, ethanol, water, propylene glycol monomethyl ether, propylene glycol monomethyl ether acetate, dimethylacetamide, dimethylformamide, n-propyl alcohol, i-propyl alcohol, 1,4-dioxane, tetrahydrofuran, diethyl ether, n-hexane, n-heptane, n-pentane, acetonitrile, and analogues thereof.

### [Stack]

The stack according to the present embodiment has a configuration in which an original flexographic printing plate having a photosensitive resin composition layer and the above-described film for flexographic printing plate production according to the present embodiment on the original flexographic printing plate are stacked.

The ablation layer in the film for flexographic printing plate production in the stack may be one before pattern drawing and processing or one after pattern drawing and processing.

The original flexographic printing plate has a support and a photosensitive resin composition layer stacked on the support.

As will be described later, relief formation is performed on the original flexographic printing plate by pattern exposure, and the unexposed portion is developed and removed to thereby obtain the target flexographic printing plate.

### (Support)

Examples of the support of original printing plate include, but are not limited to, a polyester film, a polyamide film, a polyacrylonitrile film, and a polyvinyl chloride film. Among these, the support is preferably a polyester film.

Examples of the polyester used for the support include, but are not limited to, polyethylene terephthalate, polybutylene terephthalate, and polyethylene naphthalate.

The thickness of the support is not particularly limited, but is preferably 50 to 300 µm.

A predetermined adhesive layer may be provided on the support in order to enhance the adhesive force between the support and the photosensitive resin composition layer which will be described later. Examples of the adhesive layer include, but are not particularly limited to, the adhesive layer described in International Publication No. WO 2004/104701, Japanese Patent No. 3094647, and Japanese Patent No. 2634429.

### (Photosensitive Resin Composition Layer)

The original printing plate has a photosensitive resin composition layer on the support. The photosensitive resin composition layer may be stacked directly on the support, or may be indirectly stacked via a predetermined adhesive layer or the like.

The photosensitive resin composition layer is preferably in a form containing, for example, the polymer (b-1), ethylenically unsaturated compound (b-2), and photopolymerization initiator (b-3) described later. They can be used selectively as appropriate. The photosensitive resin composition layer may further contain an auxiliary additive component, if necessary.

Hereinafter, each component of the photosensitive resin composition layer will be described in detail.

### <Polymer (b-1)>

The polymer (b-1) may be a linear, branched, or dendritic polymer, and may be a homopolymer or a copolymer. The copolymer may be a random copolymer, an alternating copolymer, or a block copolymer.

Examples of the polymer (b-1) include a polymer conventionally used in the production of flexographic printing plates, such as completely or partially hydrolyzed polyvinyl ester, partially hydrolyzed polyvinyl acetate, a polyvinyl alcohol derivative, a partially hydrolyzed vinyl acetate/alkylene oxide graft copolymer, or polyvinyl alcohol subsequently acylated polymer-analogous reaction, polybutadiene, polyamide, and mixtures thereof.

In addition to those described above, a thermoplastic elastomer block copolymer can also be used, for example.

Examples of the thermoplastic elastomer block copolymer include a copolymer containing at least one block containing an alkenyl aromatic monomer unit and at least one block containing a 1,3-diene monomer unit. Examples of the alkenyl aromatic compound that forms the alkenyl aromatic monomer unit include styrene, α-methylstyrene, and vinyltoluene. As 1,3-diene, for example, butadiene and isoprene are preferable from the viewpoint of reducing the steric hindrance of a vinyl group, enhancing photo-cross-linking efficiency, and preventing elution of the ablation layer to the original printing plate after exposure.

Examples of the polymer (b-1) include, but are not limited to, polyester, polyamide, and polyurethane. From the viewpoint of preventing damage to the relief surface due to the load when peeling off the film for flexographic printing plate production after the exposure step, the polymer (b-1) more preferably includes polyurethane. The polyurethane preferably has a (meth)acrylic group as a terminal group from the viewpoint of improving the mechanical physical properties of the finally obtained flexographic printing plate by photo-cross-linking.

Examples of a method for producing the polyurethane having a (meth)acrylic group as a terminal group include a method of reacting diol having a repeat unit in the molecule with diisocyanate to form polyurethane having a terminal isocyanate group with an arbitrary molecular weight, and subsequently reacting the polyurethane with a compound having active hydrogen and a (meth)acrylic group in one molecule for production. Another example thereof includes a method of reacting diol having a repeat unit in the molecule with diisocyanate to form polyurethane having a terminal isocyanate group with an arbitrary molecular weight, and subsequently reacting the polyurethane with a compound having a hydroxy group and a (meth)acrylic group in one molecule for production.

The polyurethane structure obtained by the production method described above is a structure constructed through the reaction of diol having a repeat unit in the molecule with diisocyanate.

Hereinafter, the "polyurethane having a (meth)acrylic group as a terminal group" produced by the method described above is referred to as an "unsaturated prepolymer".

Examples of the "diol having a repeat unit in the molecule" for use in the production of the unsaturated prepolymer include, but are not limited to, polyester diol consisting of dicarboxylic acid and diol; polyether diol; polyether/polyester copolymer diol; and a 1,2-polybutadiene compound having a terminal hydroxy group. The diol having a repeat unit in the molecule may be used singly or may be used in combinations of two or more thereof.

Examples of the dicarboxylic acid constituting the polyester diol include, but are not limited to, succinic acid, glutaric acid, adipic acid, pimelic acid, suberic acid, azelaic acid, sebacic acid, maleic acid, terephthalic acid, isophthalic acid and 1,5-naphthalenedicarboxylic acid.

Examples of the diol constituting the polyester diol include, but are not limited to, 1,4-butanediol, 2-methyl-1,3-propanediol, 3-methyl-1,5-pentanediol, neopentyldiol, 1,6-hexanediol, 1,9-nonanediol, 2-methyl-1,8-octanediol, and diethylene glycol (dioxyethylenediol).

Examples of the polyether diol include, but are not limited to, polyoxyethylenediol, polyoxypropylenediol, polyoxytetramethylenediol, polyoxy 1,2-butylenediol, polyoxyethylene/polyoxypropylene random copolymer diol, polyoxyethylene/polyoxypropylene block copolymer diol, polyoxyethylene/polyoxytetramethylene random copolymer diol, and polyoxyethylene/polyoxytetramethylene block copolymer diol.

Examples of the polyether/polyester copolymer diol include, but are not limited to, a copolymer having a structure where the repeat unit that forms the molecular chain of the above-described polyether diol and the repeat unit that forms the molecular chain of the above-described polyester diol are linked in a block or random pattern.

The 1,2-polybutadiene compound having a terminal hydroxy group may be a hydrogenated compound. Examples of the 1,2-polybutadiene compound having a terminal hydroxy group include, but are not limited to, poly-1-butene hydride and 1,2-polybutadiene hydride. The number of terminal hydroxy groups is not particularly limited and is preferably 1.2 or more, more preferably 1.5 or more, and further preferably 2.0 or less per molecule from the viewpoint of preventing damage to the relief surface due to the load when peeling off the film for printing plate production after exposure.

Examples of the diisocyanate include, but are not limited to, tolylene diisocyanate, xylylene diisocyanate, hexamethylene diisocyanate, trimethylhexamethylene diisocyanate, isophorone diisocyanate, diphenylmethane diisocyanate, cyclohexane diisocyanate, dicyclohexylmethane diisocyanate, and norbornene diisocyanate.

The diisocyanate may be used singly or in combinations of two or more thereof.

### <Ethylenically Unsaturated Compound (b-2)>

The photosensitive resin composition layer preferably contains an ethylenically unsaturated compound (b-2), as described above. The ethylenically unsaturated compound (b-2) is a compound having a radically polymerizable unsaturated double bond.

Examples of the ethylenically unsaturated compound (b-2) include, but are not limited to, olefins such as ethylene, propylene, vinyltoluene, styrene, and divinylbenzene; acetylenes; (meth)acrylic acid and/or derivatives thereof; haloolefins; unsaturated nitriles such as acrylonitrile; unsaturated amides such as acrylamide or methacrylamide, and derivatives thereof; unsaturated dicarboxylic acids and derivatives thereof such as maleic anhydride, maleic acid, and fumaric acid; vinyl acetates; N-vinylpyrrolidone; N-vinylcarbazole; and N-substituted maleimide compounds.

Examples of each of the derivatives include, but are not limited to, an alicyclic compound having a cycloalkyl group, a bicycloalkyl group, a cycloalkenyl group, a bicycloalkenyl group, or the like; an aromatic compound having a benzyl group, a phenyl group, a phenoxy group, a naphthalene skeleton, an anthracene skeleton, a biphenyl skeleton, a phenanthrene skeleton, a fluorene skeleton, or the like; a compound having an alkyl group, a halogenated alkyl group, an alkoxyalkyl group, a hydroxyalkyl group, an aminoalkyl group, a glycidyl group, or the like; an ester compound with a polyhydric alcohol such as an alkylene glycol, a polyoxyalkylene glycol, a polyalkylene glycol, or trimethylolpropane; and a compound having a polysiloxane structure, such as polydimethylsiloxane and polydiethylsiloxane.

In addition, the ethylenically unsaturated compound (b-2) may be a heteroaromatic compound containing an element such as nitrogen or sulfur.

Examples of the (meth)acrylic acid and/or derivatives thereof include, but are not limited to, a diacrylate and a dimethacrylate of an alkanediol such as hexanediol or nonanediol; a diacrylate and a dimethacrylate of ethylene glycol, diethylene glycol, propylene glycol, dipropylene glycol, polyethylene glycol, or butylene glycol; trimethylolpropane tri(meth)acrylate; dimethylol tricyclodecane di(meth)acrylate; isobornyl (meth)acylate; phenoxy polyethylene glycol (meth)acrylate; and pentaerythrit tetra(meth)acrylate.

These may be used singly or in combinations of two or more thereof.

From the viewpoint of improving the strength of the original flexographic printing plate and preventing damage to the relief surface due to the load when peeling off the film for flexographic printing plate production according to the present embodiment after exposure, at least one (meth)acrylate is preferably used, and at least one bifunctional (meth)acrylate is more preferably used as the ethylenically unsaturated compound (b-2).

### <Photopolymerization Initiator (b-3)>

The photosensitive resin composition layer preferably contains a photopolymerization initiator (b-3).

The photopolymerization initiator (b-3) is a compound that absorbs the energy of light to produce a radical. Examples thereof include a degradable photopolymerization initiator, a hydrogen abstraction type photopolymerization initiator, and a compound having a site functioning as a hydrogen abstraction type photopolymerization initiator and a site functioning as a degradable photopolymerization initiator in the same molecule.

Examples of such a photopolymerization initiator (b-3) include, but are not limited to, benzophenones such as benzophenone, 4,4-bis(diethylamino)benzophenone, 3,3',4,4'-benzophenone tetracarboxylic anhydride, and 3,3',4,4'-tetramethoxy benzophenone; anthraquinones such as t-butyl anthraquinone and 2-ethyl anthraquinone; thioxanthones such as 2,4-diethyl thioxanthone, isopropyl thioxanthone, and 2,4-dichloro thioxanthone; Michler's ketone; acetophenones such as diethoxyacetophenone, 2,2-dimethoxy-2-phenylacetophenone, 2-hydroxy-2-methyl-1-phenylpropan-1-one, benzyl dimethyl ketal, 1-hydroxycyclohexyl-phenyl ketone, 2-methyl-2-morpholino(4-thiomethylphenyl)propan-1-one, 2-methyl-1-(4-methylthiophenyl)-2-morpholino-propan-1-one, 2-benzyl-2-dimethylamino-1-(4-morpholinophenyl)-butanone, and trichloroacetophenone; benzoin ethers such as benzoin methyl ether, benzoin ethyl ether, benzoin isopropyl ether, and benzoin isobutyl ether; acylphosphine oxides such as 2,4,6-trimethylbenzoyl diphenyl phosphine oxide, bis(2,6-dimethoxybenzoyl)-2,4,4-trimethyl pentyl phosphine oxide, and bis(2,4,6-trimethylbenzoyl)-phenyl phosphine oxide; methyl benzoylformate; 1,7-bisacridinyl heptane; 9-phenyl acridine; and azo compounds such as azobisisobutyronitrile, diazonium compounds, and tetrazene compounds.

These may be used singly or in combinations of two or more thereof.

The content of the photopolymerization initiator (b-3) in the photosensitive resin composition layer is preferably 0.1% by mass or more and 10% by mass or less, more preferably 0.1% by mass or more and 5% by mass or less, and further preferably 0.3% by mass or more and 5% by mass or less when the whole amount of the photosensitive resin composition layer is assumed to be 100% by mass from the viewpoint of preventing breakage of the finally obtained original flexographic printing plate and preventing damage to the relief surface due to the load when peeling off the film for printing plate production according to the present embodiment after exposure.

### <Auxiliary Additive Component>

The auxiliary additive component is not limited, and examples thereof include a plasticizer, a thermal polymerization inhibitor, an antioxidant, a light stabilizer, an ultraviolet ray absorber, and a dye or pigment.

Examples of the plasticizer include, but are not limited to, a liquid diene such as liquid polybutadiene, liquid polyisoprene, a modified product of liquid polybutadiene, a modified product of liquid polyisoprene, a liquid acrylonitrile-butadiene copolymer, and a liquid styrene-butadiene copolymer; a hydrocarbon oil such as naphthene oil and paraffin oil; a conjugated diene rubber mainly composed of a liquid diene, such as a liquid acrylonitrile-butadiene copolymer or a liquid styrene-butadiene copolymer; a polystyrene having a number average molecular weight of 2000 or less; and an ester-based plasticizer such as a sebacic acid ester or a phthalic acid ester.

These plasticizers may have a hydroxyl group or a carboxyl group. In addition, a photopolymerizable, reactive group such as a (meth)acryloyl group may be added thereto. The plasticizers may be used singly, or two or more thereof may be used together.

In the present specification, "liquid" means a characteristic having the property of being easily flow-deformable and capable of being solidified into a deformed shape by cooling.

The content of the plasticizer in the photosensitive resin composition layer is preferably 0% by mass or more and 30% by mass or less, more preferably 8% by mass or more and 30% by mass or less, and further preferably 8% by mass or more and 25% by mass or less when the whole amount of the photosensitive resin composition layer is assumed to be 100% by mass from the viewpoint of improving the flexibility of the resulting original flexographic printing plate and preventing damage to the ablation layer when peeling off the film for printing plate production according to the present embodiment after exposure and elution to the photosensitive resin composition layer.

As the thermal polymerization inhibitor and the antioxidant, those usually used in the field of resin materials or rubber materials can be used. Specific examples thereof include a phenol-based material.

Examples of the phenol-based material as the thermal polymerization inhibitor and the antioxidant include, but are not limited to, vitamin E, tetrakis-(methylene-3-(3',5'-di-t-butyl-4'-hydroxyphenyl)propionate)methane, 2,5-di-t-butylhydroquinone, 2,6-di-t-butyl-p-cresol, 3,9-bis-{1,1-dimethyl-2-[3-(3-t-butyl-4-hydroxy-5-methylphenyl)propionyloxy]ethyl}-2,4,8,10-tetraoxaspiro(5,5)undecane, and 2-t-butyl-6-(3-t-butyl-2-hydroxy-5-methylbenzyl)-4-methylphenyl acrylate.

Other examples of the thermal polymerization inhibitor and the antioxidant include a phosphine-based material such as triphenyl phosphite.

The thermal polymerization inhibitor and the antioxidant may be used singly or in combinations of two or more thereof.

Examples of the light stabilizer and the ultraviolet ray absorber include, but are not limited to, known benzophenone-based, salicylate-based, acrylonitrile-based, metal complex-based, or hindered amine-based compounds.

The dye or pigment described below may also be used as the ultraviolet ray absorber.

Examples of such a light stabilizer and an ultraviolet ray absorber include, but are not limited to, 2-ethoxy-2'-ethyloxalic acid bisanilide, 2,2'-dihydroxy-4-methoxybenzophenone, bis(1,2,2,6,6-pentamethyl-4-piperidyl)-decanedioate, and 1,2,3-benzotriazole.

The dye or pigment is effective as coloring means for improving visibility.

Examples of the dye include, but are not limited to, a basic dye, an acid dye, and a direct dye, which are water-soluble, and a sulfur dye, an oil-soluble dye, and a disperse dye, which are non-water-soluble. Particularly, an anthraquinone-based dye, an indigoid-based dye, and an azo-based dye are preferable.

Examples of the pigment include, but are not particularly limited to, a natural pigment, a synthetic inorganic pigment, and a synthetic organic pigment. Examples of the synthetic organic pigment include an azo-based pigment, a triphenylmethane-based pigment, a quinoline-based pigment, an anthraquinone-based pigment, and a phthalocyanine-based pigment.

### [Method for Producing Flexographic Printing Plate]

Hereinafter, suitable forms will be given as to the method for producing a flexographic printing plate according to the present embodiment. The method for producing a flexographic printing plate according to the present embodiment is not limited by the following forms.

In the method for producing a flexographic printing plate according to the present embodiment, it is preferable to use the above-described stack according to the present embodiment.

As described above, the stack has a configuration in which an original flexographic printing plate having a photosensitive resin composition layer and the film for flexographic printing plate production according to the present embodiment are stacked.

The method for producing a flexographic printing plate according to the present embodiment includes: a drawing step of irradiating the film for flexographic printing plate production with an infrared ray to draw and process a pattern; an exposure step of irradiating the photosensitive resin composition layer with an ultraviolet ray to form a pattern using, as a mask, the ablation layer on which the pattern has been drawn and processed in the drawing step; and a developing step of removing an unexposed portion of the photosensitive resin composition layer.

In the printing pattern drawing step in the method for producing a flexographic printing plate according to the present embodiment, the target of infrared ray irradiation may be a film for flexographic printing plate production that constitutes the stack, or a film for flexographic printing plate production in the preliminary stage of constituting the stack.

That is, the film for flexographic printing plate production that constitutes the stack according to the present embodiment includes both of the forms before and after pattern drawing.

In more detail, the method for producing a flexographic printing plate according to the present embodiment includes: the step of first performing ultraviolet ray irradiation from the support side of the original flexographic printing plate that constitutes the stack according to the present embodiment (first step); the drawing step of drawing and processing a pattern on the ablation layer in the film for flexographic printing plate production by infrared ray irradiation (second step); the exposure step of irradiating the photosensitive resin composition layer with an ultraviolet ray to form a pattern using, as a mask, the ablation layer on which the pattern has been drawn and processed (third step); and the developing step of removing an unexposed portion of the photosensitive resin composition layer (fourth step).

If necessary, the step of performing a post-exposure treatment is then performed to obtain a flexographic printing plate formed from a cured photosensitive resin composition layer.

In the above-described method for producing a flexographic printing plate, the film for flexographic printing plate production that constitutes the stack in the second step is in the form before pattern drawing, and the film for flexographic printing plate production that constitutes the stack in the third step is in the form after pattern drawing.

From the viewpoint of conferring peeling properties, the surface of the flexographic printing plate may be brought into contact with a liquid containing a silicone compound and/or a fluorine compound.

Figure 2 shows a schematic diagram of a method for producing a flexographic printing plate using the film for flexographic printing plate production according to the present embodiment. Hereinafter, each step will be described in detail.

### (First Step)

In the first step, ultraviolet ray irradiation is performed to the photosensitive resin composition layer 4 from a side of the support 3 of flexographic original printing plate.

The ultraviolet ray irradiation method is not particularly limited, and can be carried out using a known irradiation unit. The wavelength of ultraviolet ray in the irradiation is preferably 150 to 500 nm, and more preferably 300 to 400 nm.

The light source of the ultraviolet ray is not limited, but, for example, a low-pressure mercury lamp, a high-pressure mercury lamp, an ultrahigh-pressure mercury lamp, a metal halide lamp, a xenon lamp, a zirconium lamp, a carbon arc lamp, and a fluorescent lamp for ultraviolet ray can be used.

This first step may be performed before or after the second step described later.

### (Second Step)

In the second step, the ablation layer 2 in the film for flexographic printing plate production is irradiated with an infrared ray to draw and process a pattern. The drawing and processing method is not particularly limited, and can be carried out using a known irradiation unit. The irradiation of infrared ray to the ablation layer 2 can be carried out from the ablation layer 2 side.

The ablation layer 2 is then pattern-irradiated with an infrared ray to decompose the resin of the irradiated part of the infrared ray, and the pattern is drawn and processed. This forms a mask of the ablation layer on the film for flexographic printing plate production. As a result, an ablation layer 2' on which the pattern has been drawn and processed is obtained.

Examples of the infrared laser for use in the second step include ND/YAG laser (for example, 1064 nm) or diode laser (for example, 830 nm). Laser systems suitable for CTP plate making techniques are sold on the market, and, for example, a diode laser system CDI Spark (Esko-Graphics BV.) can be used. This laser system includes: a rotary cylindrical drum that holds the film for flexographic printing plate production; an IR laser irradiation apparatus; and a layout computer, and image information is directly sent from the layout computer to the laser apparatus.

In the method for producing a flexographic printing plate according to the present embodiment, the second step may be carried out with the film for flexographic printing plate production stacked on the photosensitive resin composition layer, or it may be carried out in the preliminary stage of stacking it on the photosensitive resin composition layer.

### (Third Step)

In the third step, the photosensitive resin composition layer 4 is irradiated with an ultraviolet ray for pattern exposure using, as a mask, the ablation layer 2' on which the pattern has been drawn and processed.

At this time, the light passing through the mask promotes a curing reaction in the photosensitive resin composition layer 4, and the pattern formed in the ablation layer 2' is transferred to the photosensitive resin composition layer 4 in which the convex and concave are inverted, thereby obtaining a pattern-exposed photosensitive resin composition layer 4'. Ultraviolet ray irradiation may be performed on the whole surface or may be performed partially.

Although the film for flexographic printing plate production according to the present embodiment can be used with no particular restrictions regardless of which side faces up, from the viewpoint of mitigating the effects of refraction and scattering of ultraviolet light with which the photosensitive resin composition layer is irradiated, it is preferable to dispose the film for flexographic printing plate production so that the side of the pattern-drawn ablation layer 2' is in contact with the photosensitive resin composition layer.

Meanwhile, for purposes including protection and surface treatments for the photosensitive resin composition layer, a separate film may be established between the film for flexographic printing plate production on which the pattern has been drawn and processed and the photosensitive resin composition layer 4.

One or more intermediate layers may be further established between the photosensitive resin composition layer 4 and the ablation layer 2'. Examples of the intermediate layers include, but are not limited to, an oxygen-inhibiting layer, an adhesive layer, and a protective layer.

Hereinafter, each layer will be described.

In order to prepare printed materials with high definition and highlight areas, it is necessary to form tiny dots on the flexographic printing plate. From the viewpoint of forming such tiny dots, it is preferable that the intermediate layer is an oxygen-inhibiting layer having oxygen-inhibiting ability.

If the radical polymerization reaction when curing the photosensitive resin composition layer 4 by ultraviolet ray irradiation is suppressed by oxygen, an unreacted portion may remain in the exposed portion of the photosensitive resin composition layer 4. Since this unreacted portion is removed in the fourth step described later, the final pattern formed on the flexographic printing plate has a shape with a curved portion at the tip. This is because the portion of the photosensitive resin composition layer 4 on the ablation layer 2' side is particularly susceptible to polymerization inhibition by oxygen, and an unreacted portion tends to occur in the photosensitive resin composition layer 4 directly below the ablation layer 2'.

In contrast, if the amount of coexisting oxygen is reduced at the time of ultraviolet ray curing, the polymerization reaction is less likely to be suppressed, and the final pattern formed has a shape with a flat portion at the tip. Accordingly, when attempting to prepare a pattern with a flat portion at the tip, it is preferable that the intermediate layer has an oxygen-inhibiting ability, which can reduce oxygen in contact with the photosensitive resin composition layer 4.

Alternatively, the intermediate layer may be an adhesive layer that improves the adhesiveness between the photosensitive resin composition layer 4 and the ablation layer 2'.

Furthermore, the intermediate layer may also have a function of protecting the ablation layer 2'. In the above-described production step of a flexographic printing plate, the ablation layer 2' may be physically damaged and scratches or pinholes may occur due to contact with fingers of a worker and jigs during stacking of the photosensitive resin composition layer 4 on the film for flexographic printing plate production or during film handling.

In order to prevent such damage to the ablation layer 2', it is preferable that the intermediate layer has physical strength and heat resistance as a protective layer.

### (Fourth Step)

The fourth step is the step of removing an unexposed portion of the pattern-exposed photosensitive resin composition layer 4'.

The method for removing an unexposed portion in the fourth step (developing step) is not particularly limited, and a conventionally known method can be applied.

Specific methods include, for example, a method in which the photosensitive resin composition layer 4 is exposed and then an unexposed portion is washed away with a solvent for solvent development or a washing solution for water development, or a method in which an unexposed portion is brought into contact with a predetermined absorbing layer capable of absorbing it, and then the absorbing layer is removed to remove the unexposed portion. In a step previous to removal, the unexposed portion may be removed in advance using a spatula or a roll. If necessary, a post-exposure treatment is then performed, thereby producing a flexographic printing plate.

When an intermediate layer is located between the ablation layer 2' and the photosensitive resin composition layer 4', the intermediate layer may be removed simultaneously in the developing step.

When the photosensitive resin composition is liquid at room temperature, the above-described first to third steps shall usually include a predetermined molding step of bringing the photosensitive resin composition into a state molded into a film with a constant thickness on the support inside a dedicated apparatus (plate maker).

In the case of using the photosensitive resin composition that is liquid at room temperature as described above, the exposure step is preferably carried out by, for example, each of the following steps (A1) to (A3).

(A1):
In the step (A1), a photosensitive resin composition layer was formed by: placing a film for flexographic printing plate production on which a mask has been formed by pattern drawing and processing on an ultraviolet transmitting glass plate (lower glass plate); pouring the photosensitive resin composition thereonto; laminating the resultant with a base film serving as a support via a spacer so as to attain a constant plate thickness; and further pressing an ultraviolet transmitting glass plate (upper glass plate) thereagainst.

In this step (A1), after placing the film for flexographic printing plate production on the lower glass plate, it is preferable to vacuum the film for the purposes of securely fixing the film for flexographic printing plate production and removing oxygen-inhibiting factors. Examples of the mechanism for vacuuming include, but are not limited to, a method in which vacuuming is performed with a pump through a groove established around the lower glass.

If the rigidity of the film for flexographic printing plate production is insufficient, the film for flexographic printing plate production wrinkles in the vacuuming step, and in severe cases, wrinkles cannot be removed and remain. The resulting wrinkles are transferred to the relief surface after curing and may significantly reduce image reproducibility. In addition, if the dimensional stability of the film for flexographic printing plate production is insufficient, the pattern drawn and processed is deformed, which is likewise a contributing factor to reduced image reproducibility.

On the other hand, in the case where the rigidity of the film for flexographic printing plate production is too high, the film cannot follow the lower glass completely at the time of vacuuming, leaving a gap and remaining air. As a result, the effect of oxygen inhibition may be increased, which may adversely affect image reproducibility. In addition, the stress caused by deformation of the highly elastic film for flexographic printing plate production may be concentrated in the ablation layer, resulting in wrinkles and pinholes. That is, it is extremely important that the film for flexographic printing plate production according to the present embodiment has rigidity in the appropriate range.

A separate film may be established between the film for flexographic printing plate production on which the pattern has been drawn and processed and the photosensitive resin composition.

In the case of preparing a flexographic printing plate (having a thickness of 4 mm or larger) for use in cardboard printing, it is preferable for supplementing the strength of a relief against a printing pressure at the time of printing to form a base shelf layer in a portion of the photosensitive resin composition layer on the upper glass plate side. In this case, the photosensitive resin composition layer is formed by sandwiching a dedicated negative film (masking film) between the upper glass plate and the base film before relief exposure.

(A2):
In the step (A2), after the molding step of the photosensitive resin composition layer, back exposure is performed by irradiating it with active ray with an active light source such as an ultraviolet fluorescent lamp (for example, ray having a wavelength distribution at 300 nm or more) via the base film from the upper glass plate side, and thereby depositing a uniform thin cured resin layer (i.e., a floor formation layer (back deposition layer)) on the whole surface on the base film side of the plate.

In the case of establishing a masking film in the photosensitive resin composition layer formation step, a shelf layer is formed by similar exposure. In this case, the step is referred to as a masking exposure step.

The back deposition layer and the shelf layer are both formed by curing the photosensitive resin composition layer on a side opposite to the relief formation layer side of the photosensitive resin composition layer, i.e., on the support side. The photosensitive resin composition layer becomes the back deposition layer when cured on the whole surface on the support side, and becomes the shelf layer when partially cured depending on the position of the relief formation layer.

(A3):
In the step (A3), after the back exposure step or the masking exposure step, relief forming exposure is performed by irradiating the photosensitive resin composition layer with the same active ray as in the (A2) via the film for flexographic printing plate production on which a mask has been formed by pattern drawing and processing from the lower glass side, thereby depositing an image formation layer (relief formation layer).

In the case of forming the shelf layer by the masking exposure step, a preferable form also involves removing the masking film after the relief forming exposure, and further performing a back exposure step to form a back deposition layer on the whole surface of the base film.

### Examples

Hereinafter, the present embodiment will be described more specifically with reference to specific Examples and Comparative Examples, but the present invention is not limited to the following examples by any means.

### [Production of Film for Flexographic Printing Plate Production]

In Examples and Comparative Examples given below, a film for flexographic printing plate production was prepared.

### ((1) Production of Resin Used for Ablation Layer)

### <Production of Resin 1>

250 parts by mass of isophthalic acid, 300 parts by mass of terephthalic acid, 130 parts by mass of azelaic acid, 150 parts by mass of ethylene glycol, and 170 parts by mass of neopentyl glycol were charged into a flask, and after carrying out an esterification reaction and distilling off water at 200°C for 8 hours, 0.01 parts by mass of tetraisobutyl titanate was added, the pressure was gradually reduced, and the mixture was heated under conditions of 1 mmHg and 230°C for 6 hours to distill off a part of the glycol component and carry out a transesterification reaction. An ethyl acetate/methyl ethyl ketone = 5/1 mixed solvent was used to prepare a solution having a solid content of 50%, thereby obtaining a resin 1, which is polyester polyol having a number average molecular weight of 20000.

### <Production of Resins 2 to 5>

The parts by mass of isophthalic acid, terephthalic acid, and azelaic acid were changed as shown in Table 1 below. The other conditions were the same as for the resin 1 to obtain resins 2 to 5.

### <Resin 6 and Resin 7>

DIANAL BR-83 (manufactured by Mitsubishi Chemical Corporation, methacrylic resin) was used as a resin 6.

TUFPRENE 315 (manufactured by Asahi Kasei Corporation, styrene-butadiene block copolymer) was used as a resin 7.

**[Table 1]**

| No. | Resin | Diol (parts by mass) | | Dicarboxylic acid (parts by mass) | | | Mole ratio of aromatic dicarboxylic acid/aliphatic dicarboxylic acid |
|---|---|---|---|---|---|---|---|
| | | Ethylene glycol | Neopentyl glycol | Isophthalic acid | Terephthalic acid | Azelaic acid | |
| 1 | Resin 1 | 150 | 170 | 250 | 300 | 130 | 4.2 |
| 2 | Resin 2 | 150 | 170 | 140 | 140 | 440 | 0.6 |
| 3 | Resin 3 | 150 | 170 | 300 | 180 | 200 | 2.4 |
| 4 | Resin 4 | 150 | 170 | 310 | 280 | 80 | 7.4 |
| 5 | Resin 5 | 150 | 170 | 350 | 280 | 40 | 15.8 |
| 6 | DIANAL BR-95 | | | | | | |
| 7 | TUFPRENE 315 | | | | | | |

### ((2) Production of Film for Flexographic Printing Plate Production)

### <Production of Film for Flexographic Printing Plate Production of Example 1>

7.8 parts by mass of the resin 1, 70.0 parts by mass of toluene, and 18.0 parts by mass of cyclohexanone were mixed, and the resin 1 was dissolved in the solvent.

Thereafter, 4.0 parts by mass of carbon black #30 (manufactured by Mitsubishi Chemical Corporation) and 0.7 parts by mass of Solsperse S39000 (manufactured by Lubrizol Japan Ltd.) were further charged, and the mixture was then mixed for 4 hours using a bead mill to obtain a carbon black dispersion.

To the carbon black dispersion obtained as described above, as a curing agent, 1.9 parts by mass of an addition product of trimethylolpropane (1 mol) and tolylene diisocyanate (3 mol) prepared to have a solid content of 50% with ethyl acetate was mixed and dissolved, and a base material 1 shown in Table 3 was then coated with the mixture so that the film thickness after drying was 2.5 µm. A drying treatment at 90°C for 2 minutes was performed, followed by aging at 20°C for 24 hours, thereby obtaining a film for flexographic printing plate production, which was a stack of the ablation layer and the base material.

### <Production of Films for Flexographic Printing Plate Production of Examples 3, 5 to 16 and Comparative Examples 2 to 4>

The compositional features of the ablation layer were changed as shown in Table 2. The other conditions were the same as for the film for flexographic printing plate production of Example 1 to obtain films for flexographic printing plate production, which were stacks of the ablation layer and the base material.

### <Production of Films for Flexographic Printing Plate Production of Examples 2 and 4>

The compositional features of the ablation layer were changed as shown in Table 2. The base material used was changed to base materials shown in Table 3. The other conditions were the same as for the film for flexographic printing plate production of Example 1 to obtain films for flexographic printing plate production, which were stacks of the ablation layer and the base material.

### <Production of Film for Flexographic Printing Plate Production of Comparative Example 1>

23 parts by weight of "MA100" (carbon black, manufactured by Mitsubishi Chemical Corporation), 15 parts by weight of "Dianal" BR-95 (acrylic resin, manufactured by Mitsubishi Rayon Co., Ltd.), 6 parts by weight of a plasticizer ATBC (tributyl acetylcitrate, manufactured by J-Plus Co., Ltd.), and 30 parts by weight of "PM Acetate" (propylene glycol monomethyl ether acetate, manufactured by The Osaka Printing Ink Mfg. Co., Ltd.), which had been premixed in advance, were kneaded and dispersed using a three-roll mill to prepare a carbon black dispersion. To the dispersion were added 20 parts by weight of "Araldite" 6071 (epoxy resin, manufactured by Asahi-Ciba Ltd.), 27 parts by weight of "U-VAN" 2061 (melamine resin, manufactured by Mitsui Chemicals, Inc.), 0.7 parts by weight of "Light Ester" P-1M (phosphoric acid monomer, manufactured by Kyoeisha Chemical Co., Ltd.), and 140 parts by weight of methyl isobutyl ketone, followed by stirring for 30 minutes. Thereafter, "PM Acetate" was added so that the solid content concentration was 33% by weight to obtain a coating liquid composition. A base material 1 shown in Table 3 was coated with the obtained coating liquid composition so that the film thickness after drying was 2.5 µm. A drying treatment at 140°C for 1 minute was performed to obtain a film for flexographic printing plate production, which was a stack of an ablation layer 15 and the base material 1.

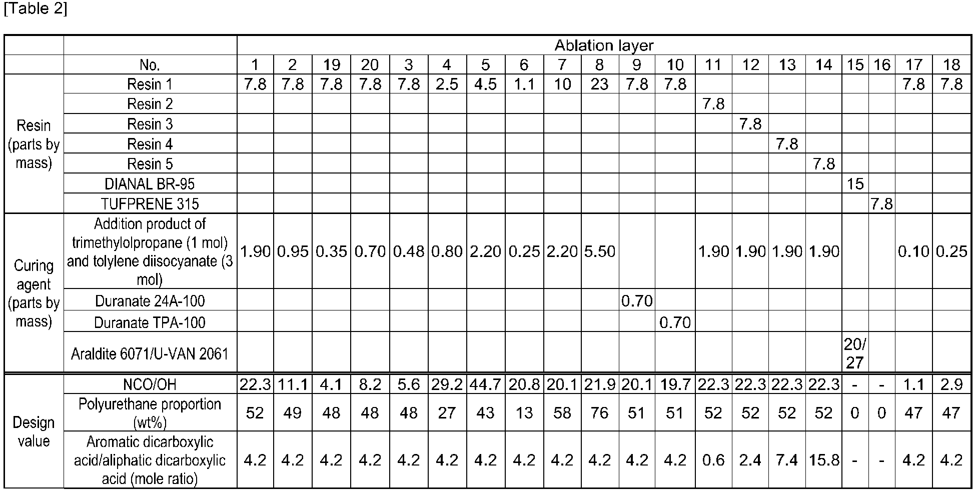

**[Table 3]**

| No. | Structure | Product name | Manufacturer or distributor |
|---|---|---|---|
| 1 | PET | Cosmoshine A4160 | Toyobo Co., Ltd. |
| 2 | PET | Lumirror X53 | Toray Industries, Inc. |
| 3 | PP | PYLEN P2161 | Toyobo Co., Ltd. |

| | | | |
|---|---|---|---|
| PET: polyethylene terephthalate PP: polypropylene | | | |

### ((3) Laser Drawing on Film for Flexographic Printing Plate Production)

The film for flexographic printing plate production was placed on Esko CDI Crystal 5080, and laser drawing was carried out on the ablation layer using a test image with the image pattern described later at a resolution of 8000 dpi and a laser intensity of 2.2 J.

### [Evaluation of Film for Flexographic Printing Plate Production]

### <Evaluation of Scratch Resistance of Ablation Layer (Pencil Hardness)>

A pencil hardness test was carried out on the ablation layer of the film for flexographic printing plate production using a Clemen-type scratch hardness tester (manufactured by Tester Sangyo Co., Ltd.) under conditions of a speed of 5 mm/sec, a scratch width of 4 cm, and a load of 200 g, and the appearance was observed.

In the following evaluation criteria, a sample given a score of A to D was evaluated as being practically usable without any problem.
A: When no film peeling occurred at a hardness of 4H or lower
B: When no film peeling was observed at a hardness of 3H or lower
C: When no film peeling was observed at a hardness of 2H or lower
D: When no film peeling was observed at a hardness of H or lower
E: When film peeling was observed at a hardness of H or lower

### <Evaluation of Laser Sensitivity>

The film for flexographic printing plate production was placed on Crystal 5080, and laser drawing was carried out using a test image having an image pattern forming a total of 2 pixels of 2 × 1 pixels at a resolution of 8000 dpi and a laser intensity of 2.2 J.

Thereafter, the ablation layer was observed using a laser microscope (VK-X100, manufactured by Keyence Corporation; 100x objective lens), and the length of the infrared ray ablation layer surface in the major axis direction (2-pixel side) that had been ablated by the laser and the length of the interface with the base material were measured. The ratio of the length of the interface with the base material to the length of the infrared ray ablation layer surface was evaluated as an index of laser sensitivity.

In the following evaluation criteria, a sample given a score of A to D was evaluated as being practically usable without any problem.
A: The hole penetrated, and the ratio of the length of the interface with the base material to the length of the infrared ablation layer surface was 0.50 or more.
B: The hole penetrated, and the ratio of the length of the interface with the base material to the length of the infrared ablation layer surface was 0.40 or more and less than 0.50.
C: The hole penetrated, and the ratio of the length of the interface with the base material to the length of the infrared ablation layer surface was 0.30 or more and less than 0.40.
D: The hole penetrated, and the ratio of the length of the interface with the base material to the length of the infrared ablation layer surface was less than 0.30.
E: The hole did not penetrate.

### <Evaluation of Blocking Resistance of Ablation Layer>

Two pieces of the film for flexographic printing plate production having dimensions of 50 cm × 50 cm were stacked so that their respective ablation layers were in contact with each other, and were allowed to stand still under conditions of a load of 2 kg in the thermo-hygrostat chamber PH-3K (manufactured by ESPEC CORP.) set at a temperature of 50°C and a relative humidity of 80% RH. The appearance of the ablation layers was observed as appropriate, and the time until blocking occurred was measured. Here, "blocking" refers to a state in which the ablation layers adhere to each other and are damaged or peeled from the base material.

In the following evaluation criteria, a sample given a score of A to D was evaluated as being practically usable without any problem.
A: More than 180 minutes
B: More than 120 minutes and 180 minutes or less
C: More than 60 minutes and 120 minutes or less
D: More than 30 minutes and 60 minutes or less
E: 30 minutes or less

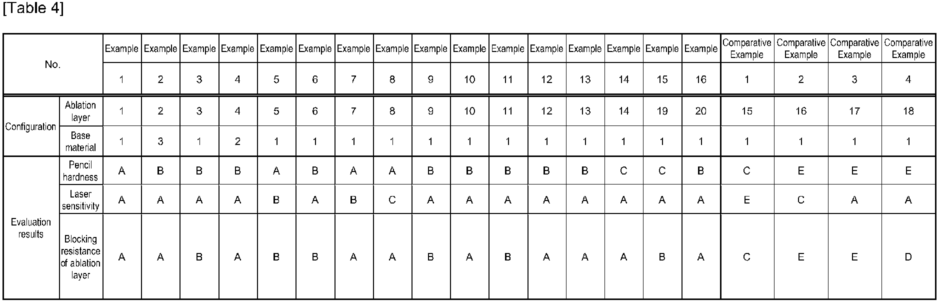

### Reference Signs List

1 base material
2 ablation layer
2' pattern-drawn ablation layer
3 support
4 photosensitive resin composition layer
4' pattern-exposed photosensitive resin composition layer

## Claims

1. A film for flexographic printing plate production, comprising:
a base material; and
an ablation layer stacked on the base material, wherein
the ablation layer comprises polyurethane constituted by polyol and polyisocyanate, and
a ratio of the number of moles of isocyanate groups of the polyisocyanate to the number of moles of hydroxy groups of the polyol (NCO/OH) is 4.0 or more.

2. The film for flexographic printing plate production according to claim 1, wherein the ratio (NCO/OH) is 8.0 or more.

3. The film for flexographic printing plate production according to claim 1, wherein an amount of the polyurethane is 20 to 70% by mass based on a mass of the ablation layer.

4. The film for flexographic printing plate production according to claim 1, wherein the number of isocyanate groups contained in the polyisocyanate is 3 or more per 1 molecule.

5. The film for flexographic printing plate production according to claim 1, wherein the polyisocyanate is adduct-type polyisocyanate.

6. The film for flexographic printing plate production according to claim 1, wherein the ablation layer further comprises carbon black.

7. The film for flexographic printing plate production according to claim 1, wherein
the polyol comprises polyester polyol,
the polyester polyol comprises a constituent unit derived from diol, a constituent unit derived from aromatic dicarboxylic acid, and a constituent unit derived from aliphatic dicarboxylic acid, and
a mole ratio of the aromatic dicarboxylic acid to the aliphatic dicarboxylic acid is 1.0 to 50.0.

8. A method for producing a flexographic printing plate, comprising:
a drawing step of irradiating the ablation layer of the film for flexographic printing plate production according to any one of claims 1 to 7 with an infrared ray to draw and process a pattern; and
an exposure step of irradiating a photosensitive resin composition layer of an original flexographic printing plate with an ultraviolet ray to form a pattern using, as a mask, the ablation layer on which the pattern has been drawn and processed in the drawing step.
